# EUROPEAN PATENT APPLICATION

(11) **EP 1 622 374 A1**
(43) Date of publication of application: **01.02.2006**
(21) Application number: 05254522.5
(22) Date of filing: 20.07.2005
(51) Int. Cl.: H04N 5/445

(54) **Data reproducing device for controlling subtitle signal display state and method thereof**

(30) Priority: 20.07.2004 KR 2004056493
(71) Applicant: Samsung Electronics Co, Ltd, Suwon-si, Gyeonggi-do (KR)
(72) Inventor: Lim, Byung-keuk, B-504, Sinmiju Apartment, Suwon-si, Gyeonggi-do (KR)
(74) Representative: Robinson, Ian Michael

(57) **Abstract**

A data reproducing device for reproducing data from a recording medium is provided. The data reproducing device includes a data reproducer (110) to reproduce the data recorded in the recording medium, a signal separator (120) to separate the data reproduced by the data reproducer (110) into a moving picture signal and a subtitle signal, a subtitle signal processor (140) to change the subtitle signal to change a display state of a subtitle displayed on a screen of the video display device, a signal processor (150) to multiplex and demodulate the subtitle signal changed by the subtitle signal processor (140) and the moving picture signal, an output part (160) to transfer the signal demodulated at the signal processor (150) to the video display device, and a controller (130) to control the subtitle signal processor (140) to change the subtitle signal according to preset subtitle information. Accordingly, the user can change the display state of the subtitle.

## Description

The present invention generally relates to a data reproducing device for, and method of reproducing data including a subtitle signal.

Data reproducing devices such as video cassette recorders (VCRs) and digital versatile disc players (DVDPs) have come into widespread use. Data reproducing devices reproduce data from diverse recording media such as video tapes and optical discs, and transfer the data to devices such as televisions. Thus, viewers can watch the data recorded on the recording media on a screen.

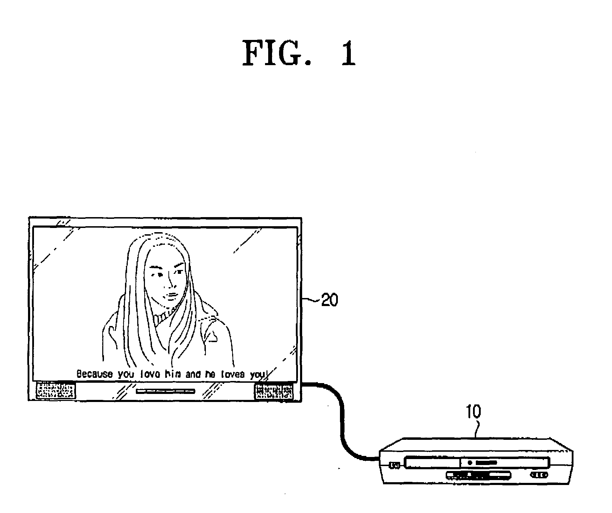

Figure 1 illustrates a conventional data reproducing system including a DVDP 10. In Figure 1, data reproduced by the DVDP 10 is transferred to a TV 20 through an interface and displayed on a screen. To this end, the DVDP 10 scans a laser signal on a surface of an optical disk and detects data from a reflected analog signal. The detected data is demodulated and transferred to the TV 20.

Typically, data reproducing devices are used to reproduce motion picture data. Motion picture data shown in a foreign language often contains a subtitle signal for domestic viewers. As shown in Figure 1, the subtitle signal is displayed at a specific area while the motion picture data is reproduced on the screen.

In the related art, it may be impossible for a user to change a display state of a subtitle signal in the conventional data reproducing device. In addition, as the display area of the subtitle signal is the bottom of the screen and overlaps the motion picture data, it may happen that the subtitle signal becomes invisible depending on the brightness of the background on the screen. In other words, if the subtitle signal has too low of a luminance and becomes vague and indistinctive from the background, the user experiences difficulty in reading the subtitle. On the other hand, if the luminance of the subtitle signal is set too high, the subtitle may flicker on the screen.

Embodiments of the present invention have been developed in order to address the problems discussed above and others associated with the conventional arrangement.

According to the present invention there is provided an apparatus and method as set forth in the appended claims. Preferred features of the invention will be apparent from the dependent claims, and the description which follows.

An aspect of the present invention provides a data processing device for, and method of enhancing distinction of a subtitle signal by allowing a user to change a display state of the subtitle signal.

Embodiments of the present invention relate to a data reproducing device for, and method of changing a display state of a subtitle signal depending on a user's setup when reproducing data recorded on a recording medium.

In one aspect of the present invention, a data reproducing device to reproduce data from a recording medium and transferring the data to an external video display device is provided. The data reproducing device comprises a data reproducer to reproduce the data recorded in the recording medium, a signal separator to separate the data reproduced by the data reproducer into a moving picture signal and a subtitle signal, a subtitle signal processor to change the subtitle signal to change a display state of a subtitle displayed on a screen of the video display device, a signal processor to multiplex and demodulate the subtitle signal changed by the subtitle signal processor and the moving picture signal, an output part to transfer the signal demodulated at the signal processor to the video display device, and a controller to control the subtitle signal processor to change the subtitle signal according to preset subtitle information.

The data reproducing device may further comprise a key input receiver to receive a selection signal to set the subtitle information, and an on-screen display (OSD) generator to generate an OSD signal to set the subtitle information. The controller may control the OSD generator and the output part to generate and transfer the OSD signal to the video display device when the selection signal is received.

The data reproducing device may further comprise a memory to store subtitle information set through an OSD window displayed on the screen of the video display device according to the OSD signal.

The subtitle information may comprise at least one of luminance, hue and chroma of the subtitle signal.

Consistent with the above and other aspects of the present invention, a method of changing a subtitle signal display of a data reproducing device which reproduces data from a recording medium and transfers the data to an external video display device is provided. The method comprises reproducing the data recorded in the recording medium, separating the data into a moving picture signal and a subtitle signal, changing the subtitle signal according to preset subtitle information, multiplexing and demodulating the changed subtitle signal and the moving picture signal, and transferring the demodulated signal to the video display device.

The method may further comprise receiving a selection signal to set the subtitle information, generating an on-screen display (OSD) signal to set the subtitle information when the selection.signal is received; and transferring the OSD signal to the video display device and displaying an OSD window on a screen.

The method may further comprise the step of storing subtitle information that is set through the OSD window.

The subtitle information may comprise at least one of luminance, hue and chroma of the subtitle signal.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of exemplary embodiments, taken in conjunction with the accompanying drawing figures of which:
Figure 1 is a conceptual diagram of a conventional data reproducing system;
Figure 2 is a block diagram of a data reproducing device according to an embodiment of the present invention; and
Figure 3 is a flowchart of a method of changing a subtitle signal display state according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the drawings.

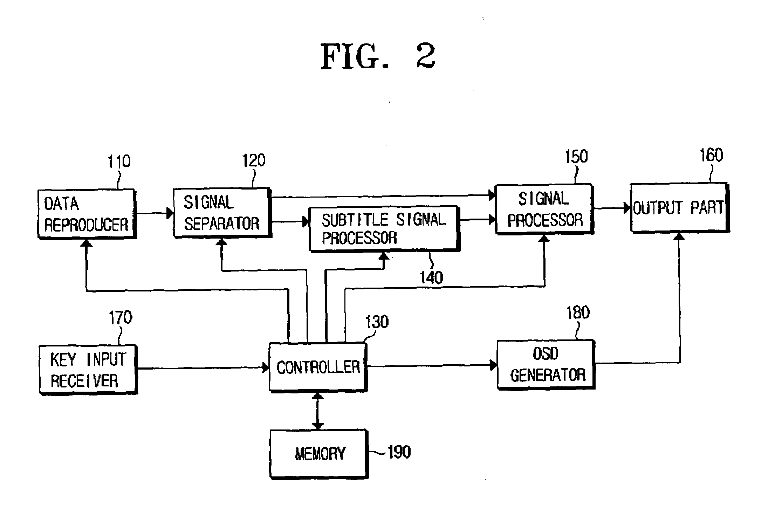

Figure 2 is a block diagram of a data reproducing device according to an embodiment of the present invention. Referring to Figure 2, the data reproducing device includes a data reproducer 110, a signal separator 120, a controller 130, a subtitle signal processor 140, a signal processor 150, an output part 160, a key input receiver 170, an on-screen display (OSD) generator 180, and a memory 190.

The data reproducer 110 serves to reproduce data recorded on a recording medium. If the data reproducing device is a digital versatile disk player (DVDP), the data reproducer 110 may include an optical pickup unit, an RF-IC (Radio Frequency Integrated Circuit) and the like. In this case, when analog data is extracted by scanning a laser signal on a recording medium, that is, onto a surface of a disk at the optical pickup unit, the RF-IC converts the analog data to digital data so as to reproduce the data. The signal separator 120 separates the data reproduced at the data reproducer 110 into a motion picture signal and a subtitle signal.

The controller 130 confirms subtitle information stored in the memory 190 upon the separation of the subtitle signal. The subtitle information relates to a state of the subtitle signal displayed on a screen of a video display device connected to the data reproducing device. Specifically, the subtitle information relates to luminance, hue and chroma of the subtitle signal. The controller 130 controls the subtitle signal processor 140 to change the subtitle signal according to the confirmed subtitle information.

The subtitle signal processor 140 changes the subtitle signal by substituting a component value of the original subtitle signal with a value according to certain subtitle information. For example, in the event that the original subtitle signal is separated into Y, Cr and Cb components, at least one of the Y, Cr and Cb values is substituted by a certain value according to the subtitle information so as to change the subtitle signal. If a user wants to change the luminance of the subtitle signal, the user has only to increase a level of the Y value, that is the luminance signal of the original subtitle signal. In the same manner, to change the hue of the original subtitle signal, the color difference signal Cr or Cb is substituted by a certain value. To this end, the subtitle information can be acquired by reading the value preset by the user and stored in the memory 190.

The changed subtitle signal at the subtitle signal processor 140 is output to the signal processor 150. The signal processor 150 multiplexes and demodulates the motion picture signal output from the signal separator 120 and the changed subtitle signal. The controller 130 controls the output part 160 to transfer the demodulated data to an external video display device.

The subtitle information is changeable by the user. Specifically, the user can input a selection signal by selecting button keys on a remote controller or a main body of the data reproducing device. The key input receiver 170 receives and sends the input selection signal to the controller 130.

Upon receiving the selection signal, the controller 130 controls the OSD generator 180 to generate an OSD signal in order to display a user interface window as an OSD allowing a user to set the subtitle information. The generated OSD signal is transferred to the video display device through the output part 160, and the video display device displays an OSD window corresponding to the received OSD signal on the screen. Hence, the user can set the luminance, the chroma, and the hue of the subtitle signal to desired values. The set subtitle information is stored in the memory 190 in place of the pre-stored subtitle information. The controller 130 changes and transfers the subtitle signal reproduced from the recording medium according to the set subtitle information so that the user can change the subtitle display state through the screen.

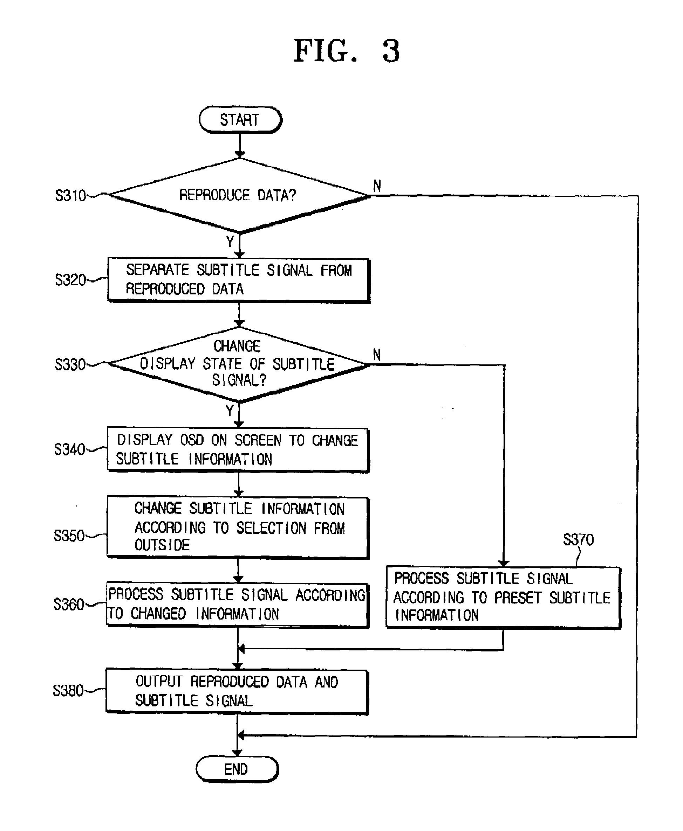

Figure 3 is a flowchart of a method of changing a subtitle signal display state according to an embodiment of the present invention. Referring to Figure 3, when a recording medium is loaded and a reproduction command is input (S310), the signal separator 120 separates the data reproduced from the recording medium into a moving picture signal and a subtitle signal (S320).

When a user requests to change a subtitle information (S330), the controller 130 controls the OSD generator 180 and the output part 160 to generate and transfer an OSD signal to the video display device. The video display device displays an OSD window corresponding to the received OSD signal (S340).

The user checks the current subtitle information through the OSD window and changes the subtitle information by manipulating button keys on a remote controller or the main body (S350). Upon receiving the changed subtitle information through the key input receiver 170, the controller 130 stores the changed subtitle information in the memory 190 (S350). The controller 130 controls the subtitle signal processor 140 to change the subtitle signal according to the changed subtitle information (S360).

If the user does not request to change the subtitle information (S330), the controller 130 reads the preset subtitle information stored in the memory 190 and changes the subtitle signal according to the read subtitle information (S370).

Next, the controller 130 multiplexes, demodulates and transfers the changed subtitle signal and the moving picture signal to an external video display device (S380).

Consequently, the user can darken or lighten the subtitle signal, and change the color of the subtitle signal as he/she desires.

In light of the foregoing as described above, embodiments of the present invention enable a user to change a subtitle signal. Accordingly, a display state of a subtitle signal on a screen also changes. In result, a user may conveniently watch a subtitle with enhanced distinction from the background.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data reproducing device to reproduce data from a recording medium and transfer the data to an external video display device, comprising:
a data reproducer (110) to reproduce the data recorded in the recording medium;
a signal separator (120) to separate the data reproduced by the data reproducer (110) into a moving picture signal and a subtitle signal;
a subtitle signal processor (140) to change the subtitle signal to change a display state of a subtitle displayed on a screen of the video display device;
a signal processor (150) to multiplex and demodulate the subtitle signal changed by the subtitle signal processor (140) and the moving picture signal;
an output part (160) to transfer the signal demodulated by the signal processor (150) to the video display device; and
a controller (130) to control the subtitle signal processor (140) to change the subtitle signal according to preset subtitle information.

2. The data reproducing device according to claim 1, further comprising:
a key input receiver (170) to receive a selection signal to set the subtitle information; and
an on-screen display (OSD) generator (180) to generate an OSD signal to set the subtitle information,
wherein the controller (130) controls the OSD generator (180) and the output part (160) to generate and transfer the OSD signal to the video display device when the selection signal is received.

3. The data reproducing device according to claim 2, further comprising a memory (190) to store subtitle information set through an OSD window displayed on the screen of the video display device according to the OSD signal.

4. The data reproducing device according to claim 3, wherein the subtitle information comprises at least one of luminance, hue and chroma of the subtitle signal.

5. A method of changing a subtitle signal display of a data reproducing device which reproduces data from a recording medium and transfers the data to an external video display device, the method comprising:
reproducing the data recorded in the recording medium;
separating the data into a moving picture signal and a subtitle signal;
changing the subtitle signal according to preset subtitle information;
multiplexing and demodulating the changed subtitle signal and the moving picture signal; and
transferring the demodulated signal to the video display device.

6. The method according to claim 5, further comprising:
receiving a selection signal to set the subtitle information;
generating an on-screen display (OSD) signal to set the subtitle information when the selection signal is received; and
transferring the OSD signal to the video display device and displaying an OSD window on a screen.

7. The method according to claim 6, further comprising storing subtitle information that is set through the OSD window.

8. The method according to claim 7, wherein the subtitle information comprises at least one of luminance, hue and chroma of the subtitle signal.

9. A method comprising:
receiving data including a subtitle signal;
processing the subtitle signal according to subtitle information; and
outputting the data including the processed subtitle signal.

10. The method according to claim 9, further comprising setting the subtitle information.

11. The method according to claim 9 or 10, wherein the processing of the subtitle signal according to subtitle information comprises:
adjusting at least one of the luminance, hue and chroma of the of the subtitle signal.

12. The method according to claim 9, 10 or 11, further comprising:
receiving the subtitle information from a user through an on-screen display.
